Europäisches Patentamt

European Patent Office

Office européen des brevets

(19)

(11) Numéro de publication : **0 057 341**
**B1**

(12) **FASCICULE DE BREVET EUROPÉEN**

(45) Date de publication du fascicule du brevet :
03.04.85

(51) Int. Cl.⁴ : **G 05 D  1/03**, G 01 S  5/00,
B 63 H 25/42

(21) Numéro de dépôt : **81402074.9**

(22) Date de dépôt : **23.12.81**

(54) **Dispositif de positionnement d'un mobile par un champ magnétique.**

(30) Priorité : **16.01.81 FR 8100779**

(43) Date de publication de la demande :
**11.08.82 Bulletin 82/32**

(45) Mention de la délivrance du brevet :
**03.04.85 Bulletin 85/14**

(84) Etats contractants désignés :
**DE GB NL**

(56) Documents cités :
**EP-A- 0 011 522**
**FR-A- 2 245 002**

(73) Titulaire : **THOMSON-CSF**
**173, Boulevard Haussmann**
**F-75379 Paris Cedex 08 (FR)**

(72) Inventeur : **Posseme, Gilles**
**THOMSON-CSF SCPI 173, bld Haussmann**
**F-75360 Paris Cedex 08 (FR)**

(74) Mandataire : **Desperrier, Jean-Louis et al**
**THOMSON-CSF SCPI 173, Bld Haussmann**
**F-75379 Paris Cedex 08 (FR)**

Jouve, 18, rue St-Denis, 75001 Paris, France

## Description

L'objet de la présente invention est la mesure des valeurs algébriques d'un champ magnétique, produit par un courant alternatif. Cette mesure étant effectuée sur un mobile à positionner, qui comporte des magnétomètres.

L'invention s'applique plus particulièrement à l'ancrage dynamique d'un bateau près d'une plate-forme en haute mer. Cette plate-forme comporte deux conducteurs plongeant dans l'eau et parcourus en sens inverse par un courant alternatif.

Sur le bateau sont montés des magnétomètres mesurant les composants du champ magnétique instantané suivant deux axes Ox et Oy liés au bateau.

Il est connu de déterminer les signes relatifs des composantes $h_x$ et $h_y$ du champ magnétique par rapport aux axes mobiles Ox et Oy ; par une démodulation synchrone d'un signal, tel que $h_x$ par l'autre tel que $h_y$. La connaissance des valeurs algébriques de $h_x$ et de $h_y$ et de l'angle de cap du bateau peut permettre connaissant la carte des champs magnétiques de positionner le bateau. (Voir le EP-A-0 011 522).

La démodulation synchrone de $h_y$ par $h_x$ produit une ambiguïté au début de la mesure de la position, car les signes de $h_x$ et $h_y$ comparés à ceux du courant instantané qui produit le champ magnétique ne sont pas connus.

Il est connu de lever de doute par une mesure grossière de la position.

La présente invention concerne une méthode de lever de doute par des mesures de champ magnétique, qui présente l'avantage de permettre un positionnement automatique et précis.

Brièvement c'est un dispositif de positionnement d'un mobile dans un plan horizontal repéré par des axes OX et OY, le mobile comportant des magnétomètres pour mesurer le champ magnétique, produit par un fil vertical parcouru par un courant i, au point de coordonnées X et Y, caractérisé par le fait que le courant i est la somme de deux courants $i_0$ et $i_1$, les courants $i_0$ et $i_1$ correspondant à des courants à des fréquences $f_0$ et $f_1$, où la fréquence $f_1$ appelée haute fréquence, est très supérieure à la fréquence $f_0$ appelée basse fréquence et que le courant $i_1$ est modulé par des impulsions de récurrence $T_0$, de durée inférieure à $T_0/4$ où $T_0 = 1/f_0$ ; et que le mobile comporte deux couples de magnétomètres, le premier couple mesurant les composantes du champ magnétique $h_x^0$ et $h_y^0$ suivant des axes Ox et Oy liés au mobile autour de la fréquence $f_0$ et le second couple de magnétomètres mesurant les composantes sur ces axes $h_x^1$ et $h_y^1$ autour de la fréquence $f_1$, que des moyens permettent à partir des signaux $h_x^0$, $h_y^0$, $h_x^1$, $h_y^1$ de reconstituer un signal S synchrone du courant $i_0$ et que le signal est utilisé pour démoduler les signaux $h_x^0$ et $h_y^0$ fournissant ainsi les valeurs algébriques des composantes du champ magnétique.

D'autres caractéristiques et avantages ressortiront par la description qui va suivre, illustrée par les figures qui représentent :

figure 1 un dessin illustrant le positionnement magnétique d'un bateau près d'une plate-forme ;

figure 2 un schéma montrant les signes des composantes du champ magnétique produit par deux fils conducteurs parcouru par un courant, dans le plan OXY ;

figure 3 les allures des signaux électriques utilisés pour lever l'ambiguïté de signe pour les champs magnétiques mesurés ;

figure 4 le schéma général des circuits pour générer à partir des champs magnétiques mesurés, un signal de référence permettant la détermination des signes des champs magnétiques ;

figure 5 le schéma de démodulation par le signal S.

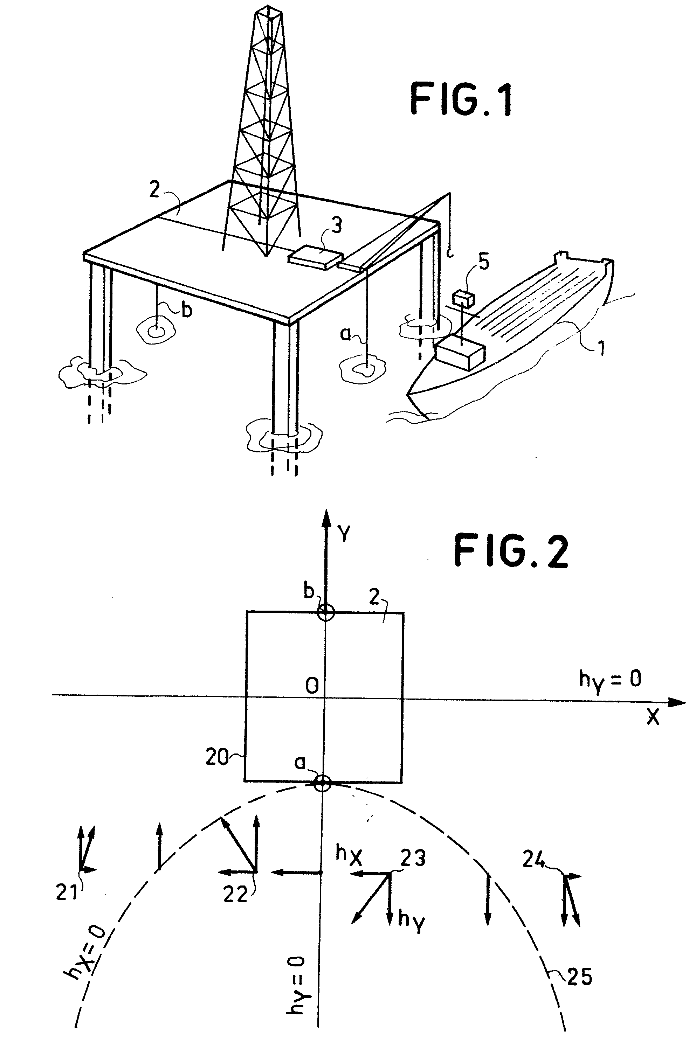

La figure 1 représente une vue schématique d'un navire en ancrage dynamique.

La plate-forme 2 comporte deux conducteurs a et b plongeant dans l'eau et alimentés par un générateur de courant alternatif 3. Soit i la valeur instantanée de ce courant qui peut avoir une variation temporelle sinusoïdale ou préférentiellement de signaux carrés à la fréquence $f_0$. A cette valeur de i de la boucle conductrice comprenant les conducteurs a et b correspond un champ magnétique $\overline{h}$ instantané dans un plan orthogonal aux conducteurs.

Les composantes de ce champ $\overline{h}$ sur des axes OX et OY de ce plan sont $h_X$ et $h_Y$. La variation temporelle de ce champ est la même que celle du courant i.

Le positionnement en un point de coordonnées X et Y consiste à déterminer ces coordonnées à partir des valeurs algébriques $h_X$ et $h_Y$, le signe de $h_X$ et de $h_Y$ tenant compte de la valeur algébrique de courant i, on prendra par exemple un courant positif pour la direction OZ perpendiculaire à OX et OY, pour le conducteur a.

Le bateau 1 comporte des magnétomètres 5 qui mesurent les composantes du champ magnétique $h_x$ et $h_y$ par rapport à des axes x et y liés au bateau. Ce sont ces valeurs mesurées ainsi que la valeur de l'angle de cap qui sont utilisées pour la commande de l'ancrage dynamique du bateau.

La figure 2 représente schématiquement la répartition du champ magnétique suivant ses deux composantes $h_X$ $h_Y$ par rapport au courant instantané i dans les deux conducteurs a et b. On considère par exemple la partie « avant » 20 de la plate-forme qui comporte le conducteur a.

Le long des axes OX et OY la composante $h_Y$ est nulle tandis que le long de la courbe 25 la composante $h_X$ est nulle. Les signes des valeurs algébriques $h_X$ et $h_Y$ déterminent ainsi quatre domaines 21, 22, 23 et 24 dans le plan OXY pour Y O, délimités par les axes OX et OY et la courbe 25 ou $h_X$ s'annule. Par exemple avec les conventions prises pour le signe du courant instantané i, dans le domaine 21 ; $h_X > O$, et $h_Y > O$, dans le

domaine 22 ; $h_X < O$ et $h_Y < O$, dans le domaine 23 ; $h_X < O$ et $h_Y < O$ et $h_Y < O$ et enfin dans le domaine 24 ; $h_X > O$ et $h_Y < O$.

Il s'introduit donc une ambiguïté sur les signes de $h_X$ et $h_Y$. Cette ambiguïté se retrouve sur les signes de $h_x$ et $h_y$. Le dispositif selon l'invention permet de lever l'ambiguïté automatiquement et avec précision.

Par ailleurs, on a intérêt à se rapprocher le plus possible d'une répartition de champ magnétique produite par un seul fil. En effet dans ce cas l'intensité du champ décroît moins vite avec la distance. De plus, en se reportant à la figure 2, on diminue l'étendue des domaines 21 et 24, le lieu 25 où $h_x = O$ tendant à devenir parallèle à l'axe OX. Pour cela les deux fils conducteurs a et b sont placés au niveau des bords opposés de la plate-forme, comme représenté sur la figure 1, pour être les plus distants possible.

Suivant l'invention, l'ambiguïté sur les signes de $h_x$ et de $h_y$ est levé en faisant passer dans les conducteurs a et b un courant i, qui est la superposition d'un courant alternatif $i_0$, à la fréquence $f_0$, appelée basse fréquence (BF) et d'un courant alternatif $i_1$ à la fréquence $f_1$ appelée haute fréquence (HF).

Préférentiellement $f_0$ est de quelques centaines de Hertz et $f_1$ de quelques dizaines de kiloherz.

Préférentiellement le courant $i_0$ à basse fréquence a une allure temporelle en signaux carrés. Il en est de même pour le courant haute fréquence $i_1$ mais celui-ci est formé d'impulsions carrées de récurrence $T_0 = 1/f_0$, ces impulsions ayant des durées inférieures à $T_0/4$, et chacun de ces impulsions se trouvant à l'intérieur d'un quart de période du courant basse fréquence.

Ces impulsions haute fréquence servent suivant l'invention, pour déterminer le signe des impulsions de courant basse fréquence et de permettre ainsi de trouver les signes des composantes $h_x$ et $h_y$.

Ces signes sont obtenus en démodulant les signaux fournis par les magnétomètres $h_x$ et $h_y$ par un signal reconstitué du courant basse fréquence.

Suivant l'invention ce signal reconstitué S du courant basse fréquence est obtenu à partir des signaux $h_x^0$, $h_y^0$, $h_x^1$ et $h_y^1 \cdot h_x^0$ et $h_y^0$ sont fournis par un premier couple de magnétomètres fournissant les composantes du champ magnétique $\vec{h}$ autour de la fréquence $f_0$, $h_x^1$ et $h_y^1$ sont fournis par un second couple de magnétomètres qui fournissent les composantes de $\vec{h}$ autour de la fréquence $f_1$.

A partir des signaux $h_x^0$ et $h_y^0$ on génère un signal $U_1$ d'impulsions carrées à la fréquence $2 f_0$, les fronts de montée d'une impulsion sur deux, coïncident avec les fronts de montée du signal BF, $i_0$. Le signal $U_1$ permet d'obtenir des impulsions $S_1$ et $S_2$ de largeur $T_0/8$ et de fréquence $f_0$ qui seront utilisées pour la comparaison avec les impulsions HF, T, détectées à partir des signaux $h_x^1$ et $h_y^1$.

Les signaux $S_1$ ont leur front de montée décalé de $T_0/8$ sur le signal $i_0$ et les signaux $S_2$ sont décalés de $T_0/2$ sur les signaux $S_1$.

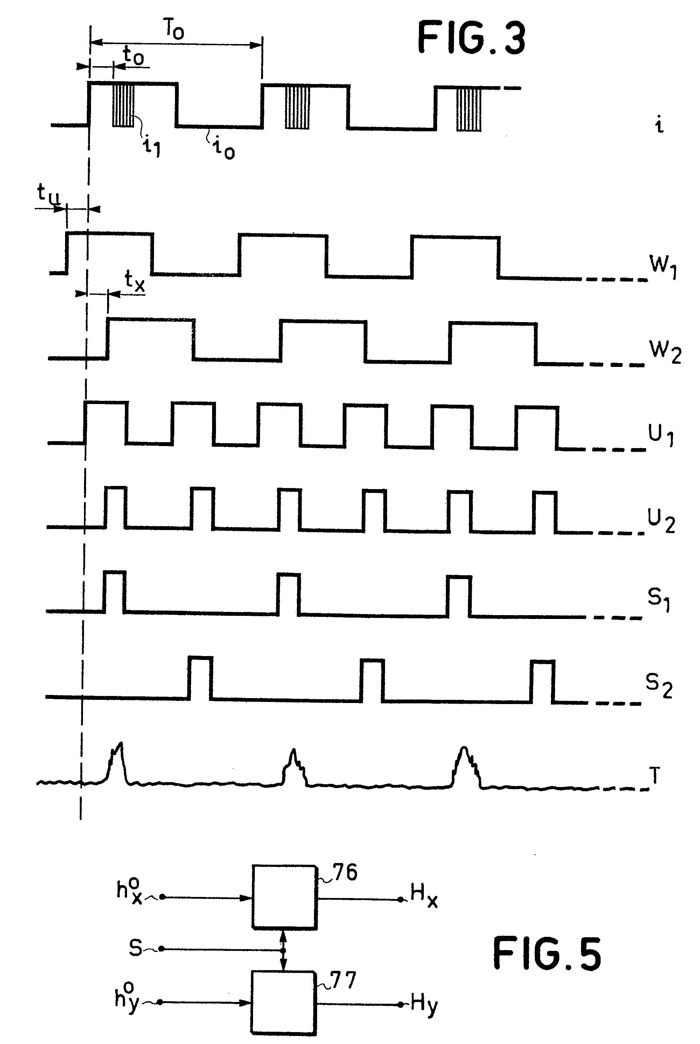

La figure 3 montre sur la ligne i la variation temporelle des courants $i_0$ et $i_1$ aux fréquences $f_0$ et $f_1$. Le courant $i_1$ a son front de montée décalé de $t_0 = T_0/8$ sur celui du courant $i_0$. Les couples de magnétomètres qui fournissent les composantes $h_x^0$, $h_y^0$ et $h_x^1$, $h_y^1$, ont des bandes passantes étroites autour de $f_0$ et de $f_1$ de façon à ne laisser passer que les fréquences fondamentales.

Les magnétomètres utilisés peuvent être par exemple du type bobine fluxmétrique dont les caractéristiques sont adaptées à la fréquence à détecter.

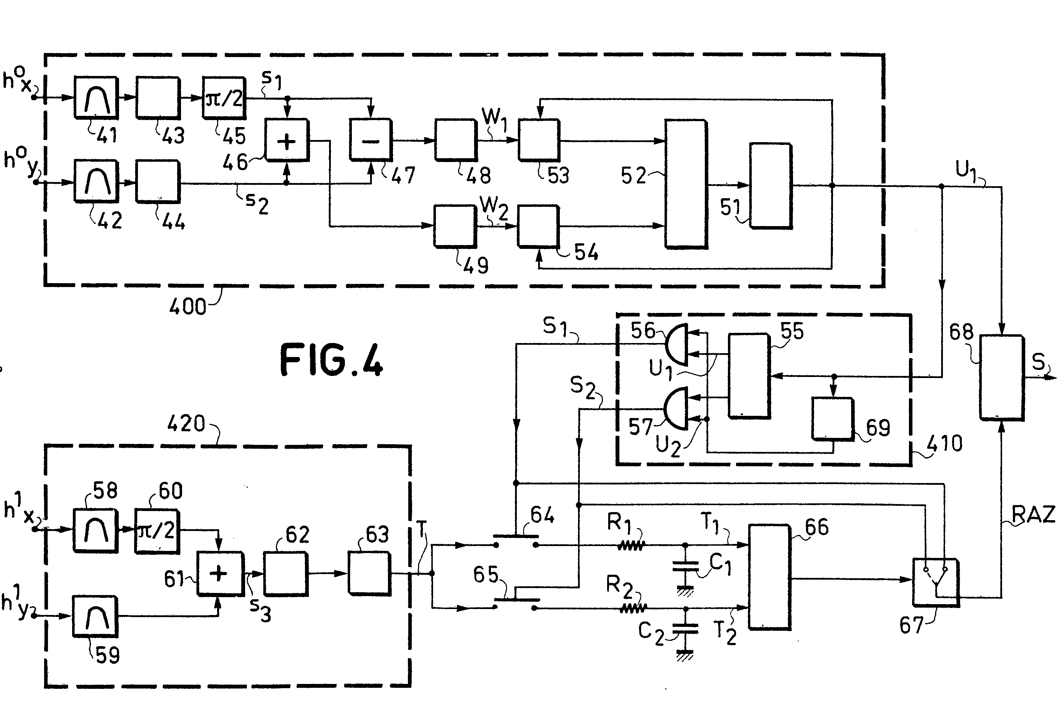

Un exemple de dispositif de lever de doute pour les signes des champs magnétiques suivant l'invention est montré par la figure 4.

Un premier ensemble 400 reçoit les signaux $h_x^0$ et $h_y^0$ et fourni le signal $U_1$ à la fréquence $2 f_0$, dont les fronts de montées impaires sont en coïncidence avec le signal $i_0$.

Les signaux $h_x^0$ et $h_y^0$ fournis par le couple de magnétomètres sont filtrés autour de la fréquence $f_0$ par des filtres 41 et 42 et appliqués à des dispositifs de contrôle automatique de gain (CAG), 43 et 44. Le signal obtenu à partir du premier CAG 43 est appliqué à un circuit déphaseur à 90°, 45. Le signal déphasé $s_1$ et le signal $s_2$ à la sortie du deuxième CAG 44 sont additionnés et soustraits dans des circuits 46 et 47.

Le signal $s_1$ déphasé est de la forme :

$$s_1 = H \cos 2 \pi f_0 t \times \cos \phi$$

et le signal $s_2$ est de la forme :

$$s_2 = H \sin 2 \pi f_0 t \times \sin \phi$$

où $\phi$ est l'angle du champ magnétique h avec l'axe OX et H une constante proportionnelle à la valeur de l'amplitude de champ $\vec{h}$.

Après addition et soustraction des signaux $s_1$ et $s_2$ et écrêtage par les circuits 48 et 49 on obtient des signaux carrés $W_1$ et $W_2$ (fig. 3) qui sont déphasés de $+ \phi$, et de $- \phi$, ce qui correspond à des avances, et de retards des fronts de montée sur le signal $i_0$ de valeur absolue $t\phi$, avec $t\phi = T_0\phi/2 \pi$.

Les deux signaux $W_1$ et $W_2$ sont appliqués à un circuit de blocage de phase bouclé. Ce circuit comprend un oscillateur contrôlé par une tension 51, appelé V.C.O. pour « Voltage Control Oscillator » dans la littérature anglo-saxonne, qui reçoit son signal de commande d'un amplificateur différentiel 52. Cet amplificateur 52 reçoit sur ses deux entrées les valeurs algébriques des différences entre les temps de montée du signal $U_1$ et des signaux $W_1$ et $W_2$ fournis par les circuits 53 et 54.

Sur la figure 3 est figuré le signal $U_1$ à la fréquence $2 f_0$ synchronisé par rapport au signal $i_0$.

La synchronisation du V.C.O. sur une fréquence double est nécessaire pour éviter les sauts de synchronisation au cours de la rotation des magnétomètres, pouvant en effet varier librement.

Les signaux $U_1$ sont utilisés dans un sous-ensemble 410 pour générer des signaux $S_1$ et $S_2$ qui servent de signaux de comparaison avec le signal détecté HF.

Dans le sous-ensemble 410 sont d'abord élaborés les signaux rectangulaires $U_2$ (fig. 3) de largeur $T_0/8$ et de fréquence 2 $f_0$ par un circuit 69. Le signal $U_1$ est appliqué à un circuit de bascule 55, diviseur par deux, dont les sorties complémentaires sont connectées à une entrée de deux circuits ET 56 et 57 qui reçoivent sur l'autre entrée le signal $U_2$. On obtient ainsi les deux signaux $S_1$ et $S_2$ représentés sur la figure 3.

Un autre sous-ensemble 420 élabore à partir des signaux reçus en HF des impulsions T. Ce sous-ensemble reçoit les valeurs des composantes du champ magnétique $h_x^1$ et $h_y^1$ qui sont filtrés autour de la fréquence $f_1$ par les circuits de filtrage 58 et 59. Ces signaux ne contiennent plus que la fréquence fondamentale $f_1$. Le signal correspondant à $h_x^1$ est déphasé de 90° par un circuit 60 et additionné dans un circuit 61 au signal correspondant à $h_y^1$.

Cette addition fournie un signal $S_3$ proportionnel à H cos (2 $\pi f_1$ t-$\phi$). Le signal $S_3$ est appliqué à un circuit de contrôle automatique de gain 62 et détecté par un circuit 63, fournissant ainsi les impulsions T montrées par la figure 3.

La position des impulsions HF détectées est très peu dépendante de l'angle $\phi$, le temps correspondant à une demi période 1/2 $f_1$ étant faible. Par conséquent ces impulsions sont à peu près synchrone soit du signal $S_1$, soit du signal $S_2$.

Deux portes 64 et 65 sont commandées par les signaux $S_1$ et $S_2$ et reçoivent le signal T. Les deux signaux de sortie des portes sont ensuite intégrés par les résistances et capacités $R_1$, $R_2$, $C_1$ et $C_2$ et les deux signaux $T_1$ et $T_2$ sont comparés dans le comparateur 66.

En sortie du comparateur, on a un signal égal à 0 ou 1 respectivement si $T_1 < T_2$ et $T_1 > T_2$. Les signaux $S_1$ et $S_2$ sont également envoyés sur un commutateur 67 commandé par le signal de sortie du comparateur 66 : le commutateur 67 fournit $S_1$ ou $S_2$ suivant que le signal d'entrée est 1 ou 0 respectivement.

Le signal $U_1$ est envoyé sur un diviseur par 2,68 dont la remise à zéro (RAZ) est fournie par le signal de sortie du commutateur ce qui permet d'obtenir le signal BF de fréquence $f_0$ avec une phase sans ambiguïté. Ce signal S va maintenant servir à démoduler les divers signaux $h_x^0$ et $h_y^0$ qui seront alors connus avec leur signe.

Le signal S fourni par le circuit diviseur par deux 68 est utilisé pour la démodulation des signaux $h_x^0$ et $h_y^0$ comme le montre la figure 5.

Les circuits de démodulation synchrone 76 et 77 reçoivent respectivement les signaux $h_x^0$ et $h_y^0$ du couple de magnétomètres basse fréquence, la démodulation étant obtenue par le signal S. On obtient ainsi les valeurs algébriques des amplitudes des composantes du champ magnétique $H_x$ et $H_y$. Ce sont ces valeurs qui sont utilisées dans les circuits de calcul de coordonnées utilisé pour le positionnement.

On a décrit ainsi un perfectionnement pour le positionnement d'un mobile d'un champ magnétique, qui évite la nécessité de recourir à des mesures directes approchées de la position.

### Revendications

1. Dispositif de positionnement d'un mobile dans un plan horizontal repéré par des axes OX et OY, le mobile comportant des magnétomètres pour mesurer le champ magnétique, produit par un fil vertical parcouru par un courant i, au point de coordonnées X et Y, caractérisé par le fait que le courant i est la somme de deux courants $i_0$ et $i_1$, les courants $i_0$ et $i_1$ correspondant à des courants à des fréquences $f_0$ et $f_1$, où la fréquence $f_1$ appelé haute fréquence, est très supérieure à la fréquence $f_0$ appelée basse fréquence et que le courant $i_1$ est modulé par des impulsions de récurrence $T_0$, de durée inférieure à $T_0/4$ où $T_0 = 1/f_0$ ; et que le mobile comporte deux couples de magnétomètres, le premier couple mesurant les composantes du champ magnétique $h_x^0$ et $h_y^0$ suivant des axes Ox et Oy liés au mobile autour de la fréquence $f_0$ et le second couple de magnétomètres mesurant les composantes sur ces axes $h_x^1$ et $h_y^1$ autour de la fréquence $f_1$, que des moyens permettent à partir des signaux $h_x^0$, $h_y^0$, $h_x^1$, $h_y^1$ de reconstituer un signal S synchrone du courant $i_0$ et que ce signal est utilisé pour démoduler les signaux $h_x^0$ et $h_y^0$ fournissant ainsi les valeurs algébriques des composantes du champ magnétique.

2. Dispositif de positionnement suivant la revendication 1, caractérisé par le fait que le courant $i_0$ à la fréquence $f_0$ a une variation temporelle en signaux carrés et que le courant $i_1$ à la fréquence $f_1$ a une variation temporelle en impulsions carrées.

3. Dispositif de positionnement suivant la revendication 2, caractérisé par le fait que les signaux fournis par le premier couple de magnétomètres $h_x^0$ et $h_y^0$ sont filtrés dans des filtres centrés autour de $f_0$ (41, 42), régulés par des circuits de contrôle automatique de gain (43, 44), le signal correspondant à $h_x^0$ étant déphasé de 90° par un déphaseur (45) et additionné et soustrait à un signal correspondant à $h_y^0$ dans des circuits d'addition et de soustraction (46, 47), les signaux additionnés et soustraits étant écrêtés par des circuits (48, 49) fournissant des signaux carrés $W_1$ et $W_2$ déphasés de + $\phi$ et de − $\phi$ ou $\phi$ est l'angle du champ magnétique avec l'axe Ox et que les signaux $W_1$ et $W_2$ sont appliqués à des moyens fournissant un signal $U_1$ de signaux carrés de fréquence 2 $f_0$ synchrone du signal $i_0$.

4. Dispositif de positionnement suivant la revendication 3, caractérisé par le fait que les moyens de génération du signal $U_1$ comprennent un oscillateur contrôlé par une tension (51) piloté par le signal de sortie d'un amplificateur différentiel (52) et deux comparateurs (53, 54) comparent les temps de montée des signaux $W_1$ et $W_2$ au temps de montée du signal fourni par l'oscillateur (51), ces comparateurs (53, 54) fournissent les deux signaux d'entrée de l'amplificateur différentiel (52) et que des moyens permettent à partir du signal $U_1$ de générer des impulsions rectangulaires $S_1$ et $S_2$ de récurrence $T_0$ de largeur d'impulsion $T_0/8$ et décalées de $T_0/2$ et que les fronts de montée de $S_1$ sont décalés de $T_0/8$ sur celui du signal $i_0$.

5. Dispositif de positionnement suivant la revendication 1, caractérisé par le fait que les composantes du champ magnétique $h_x^1$ et $h_y^1$ sont filtrés par des filtres centrés autour de $f_1$ par des filtres (58, 59), que le signal correspondant à $h_x^1$ est déphasé à 90° par un déphaseur (60) que le signal déphasé est ajouté à celui correspondant à $h_y^1$ dans un circuit d'addition (61) régulé dans un circuit de contrôle automatique de gain (62) et détecté dans un circuit de détection (63) fournissant des signaux T.

6. Dispositif de positionnement suivant les revendications 4 et 5 caractérisé par le fait que le dispositif comporte deux portes (64, 65), commandées par les signaux $S_1$ et $S_2$ et recevant le signal T, que les deux signaux de sortie des deux portes sont intégrés et comparés dans un comparateur (66) ; que le signal de sortie du comparateur commande un commutateur (67) recevant les deux signaux $S_1$ et $S_2$ ; et que le signal de sortie de ce comparateur (67), $S_1$ ou $S_2$, effectue une remise à zéro d'un circuit diviseur par deux (68), qui reçoit le signal $U_1$ et fournit le signal S reconstitué.

## Claims

1. A device for positioning a moving body in a horizontal plane indicated by the axes OX and OY, the moving body comprising magnetometers for measuring the magnetic field, produced by a vertical wire through which flows a current i, at the point of coordinates X and Y, characterized in that the current i is the sum of two currents $i_0$ and $i_1$, the said currents $i_0$ and $i_1$ corresponding to currents at frequencies $f_0$ and $f_1$, in which frequency $f_1$ called the high frequency is much higher than the frequency $f_0$ called the low frequency, and that the current i is modulated by pulses having a recurrence period of $T_0$ and lasting less than $T_0/4$ in which $T_0 = 1/f_0$, and that the moving body comprises two pairs of magnetometers, the first pair measuring the components of the magnetic field $h_x^0$ and $h_y^0$ along axes Ox and Oy associated with the moving body about frequency $f_0$, and the second pair of magnetometers measuring the components $h_x^1$ and $h_y^1$ along these axes about frequency $f_1$, that on the basis of the signals $h_x^0$, $h_y^0$, $h_x^1$, $h_y^1$ means make it possible to restore a synchronous signal S of current $i_0$, and that that signal is used for demodulating the signals $h_x^0$ and $h_y^0$ thus supplying the algebraic values of the magnetic field components.

2. A positioning device according to claim 1, characterized in that the current $i_0$ at frequency $f_0$ has a time variation in square signals and that the current $i_1$ at frequency $f_1$ has a time variation in square pulses.

3. A positioning device according to claim 2, characterized in that the signals supplied by the first pair of magnetometers $h_x^0$ and $h_y^0$ are filtered in filters (41, 42) centred around $f_0$, regulated by automatic gain control circuits (43, 44), the signal corresponding to $h_x^0$ being phase-shifted by 90° by a phase-shifting means and added and subtracted to a signal corresponding to $h_y^0$ in addition and substraction circuits (46, 47), the added and subtracted signals being clipped by circuits (48, 49) supplying square signals $W_1$ and $W_2$ phase-shifted by $+ \phi$ and $- \phi$, in which $\phi$ is the magnetic filed angle with the axis Ox, and that the signals $W_1$ and $W_2$ are applied to means supplying a signal $U_1$ of square signals of frequency $2 f_0$ synchronous with signal $i_0$.

4. A positioning device according to claim 3, characterized in that the means for generating signal $U_1$ comprise a voltage controlled oscillator (51) controlled by the output signal of a differential amplifier (52), and two comparators (53, 54), which compare the rise times of the signals $W_1$ and $W_2$ with the rise time of the signal supplied by the oscillator (51), said comparators (53, 54) supplying the two input signals of the differential amplifier (52), and that on the basis of signal $U_1$ means make it possible to generate square-wave pulses $S_1$ and $S_2$ of recurrence $T_0$; of pulse width $T_0/8$ and shifted by $T_0/2$, and that the leading edges of $S_1$ are shifted by $T_0/8$ with respect to that of signal $i_0$.

5. A positioning device according to claim 1, characterized in that the magnetic field components $h_x^1$ and $h_y^1$ are filtered by filters (58, 59) centred about $f_1$, that the signal corresponding to $h_x^1$ is phase-shifted by 90° by a phase-shifting means (60), that the phase-shifted signal is added to that corresponding to $h_y^1$ in an adder circuit (61), regulated in an automatic gain control circuit (62) and detected in a detection circuit (63) supplying signals T.

6. A positioning device according to claims 4 and 5, characterized in that it comprises two gates (64, 65) controlled by the signals $S_1$ and $S_2$ and receiving the signal T, that the two output signals of the two gates are integrated and compared in a comparator (66), that the output signal of the comparator controls a switch (67) receiving the two signals $S_1$ and $S_2$ and that the output signal $S_1$ or $S_2$ of said switch (67) effects a resetting of a divider by two circuit (68), which receives the signal $U_1$ and supplies the restored signal S.

## Ansprüche

1. Vorrichtung zur Positionierung eines beweglichen Körpers in einer durch Achsen OX und OY definierten waagerechten Ebene, der Magnetometer zur Messung des von einem von einem Strom i durchflossenen, in einem Punkt X-Y senkrecht angeordneten Draht erzeugten Magnetfelds aufweist, dadurch gekennzeichnet, daß der Strom i die Summe zweier Ströme $i_0$ und $i_1$ ist, die Strömen der Frequenzen $f_0$ und $f_1$ entsprechen, wobei die Hochfrequenz genannte Frequenz $f_1$ deutlich höher als die Niederfrequenz bezeichnete Frequenz $f_0$ ist, und daß der Strom $i_1$ mit Impulsen einer Wiederholfrequenz $T_0$ und einer Impulsbreite kleiner als $T_0/4$ moduliert wird, wobei $T_0 = 1/f_0$ ist, und daß der bewegliche Körper zwei Paare von Magnetometern aufweist, von denen das erste die Komponenten $h_x^0$ und $h_y^0$ des Magnetfelds entlang den mit dem Körper verbundenen Achsen Ox und Oy im Umkreis der Frequenz $f_0$ mißt, während das zweite Paar von Magnetometern die Komponenten $h_x^1$ und $h_y^1$ entlang derselben Achsen im Umkreis der Frequenz $f_1$ mißt, daß Mittel die Bildung eines zum Strom $i_0$ synchronen Signals aus den Signalen $h_x^0$, $h_y^0$, $h_x^1$, $h_y^1$ erlauben und daß dieses Signal zur Demodulation der Komponenten $h_x^0$ und $h_y^0$ verwendet wird, woraus die algebraischen Werte des Magnetfelds erzeugt werden.

2. Vorrichtung zur Positionierung nach Anspruch 1, dadurch gekennzeichnet, daß der Strom $i_0$ bei der Frequenz $f_0$ eine zeitliche Veränderung in Rechtecksignalen besitzt und daß der Strom $i_1$ bei der Frequenz $f_1$ eine zeitliche Veränderung in Rechtecksignalen besitzt.

3. Vorrichtung zur Positionierung nach Anspruch 2, dadurch gekennzeichnet, daß die vom ersten Paar von Magnetometern gelieferten Signale $h_x^0$ und $h_y^0$ in um die Frequenz $f_0$ zentrierten Filtern (41, 42) gefiltert, in Schaltkreisen mit automatischer Verstärkungsregelung (43, 44) geregelt werden, wobei das dem Signal $h_x^0$ entsprechende Signal in einem Phasenschieber (45) um 90° phasenverschoben wird und dann einem dem Signal $h_y^0$ entsprechenden Signal in einem Addier- und Subtraktionsschaltkreis (46, 47) zugefügt bzw. von ihm abgezogen wird, die addierten und abgezogenen Signale in Schaltkreisen (48, 49) begrenzt werden und so Rechtecksignale $W_1$ und $W_2$ liefern, die um einen Winkel von $+\phi$ und von $-\phi$ phasenverschoben sind, wobei $\phi$ der Winkel des Magnetfelds mit der Achse Ox ist, und daß die Signale $W_1$ und $W_2$ an Mittel angelegt werden, die ein Signal $U_1$ von

Rechtecksignalen der Frequenz $2 f_0$ liefern, das zum Signal $i_0$ synchron ist.

4. Vorrichtung zur Positionierung nach Anspruch 3, dadurch gekennzeichnet, daß die Mittel zur Erzeugung des Signals $U_1$ einen spannungsgesteuerten Oszillator (51), der vom Ausgangssignal eines Differentialverstärkers (52) gesteuert wird, und zwei Komparatoren (53, 54) enthalten, die die Anstiegszeit der Signale $W_1$ und $W_2$ mit der Anstiegszeit des vom Oszillator (51) gelieferten Signals vergleichen und die zwei Eingangssignale des Differentialverstärkers (52) liefern, und daß Mittel die Erzeugung von Rechteckimpulsen $S_1$ und $S_2$ ausgehend vom Signal $U_1$ ermöglichen, wobei diese Rechteckimpulse eine Wiederholperiode von $T_0$ und eine Impulsbreite von $T_0/8$ besitzen und um $T_0/2$ verschoben sind, und daß die Anstiegsflanken von $S_1$ um $T_0/8$ gegenüber der Anstiegsflanke des Signals $i_0$ verschoben sind.

5. Vorrichtung zur Positionierung nach Anspruch 1, dadurch gekennzeichnet, daß die Komponenten $h_x^1$ und $h_y^1$ des Magnetfelds in um die Frequenz $f_1$ zentrierten Filtern (58, 59) gefiltert werden, daß das dem Signal $h_x^1$ entsprechende Signal um 90° in einem Phasenschieber (60) verschoben wird, daß das phasenverschobene Signal dem dem Signal $h_y^1$ entsprechenden Signal in einem Addierschaltkreis (61) zugefügt wird, in einem Schaltkreis mit automatischer Verstärkungssteuerung (62) geregelt und in einem Detektorschaltkreis (63), der Signale T liefert, detektiert wird.

6. Vorrichtung zur Positionierung nach den Ansprüchen 4 und 5, dadurch gekennzeichnet, daß die Vorrichtung zwei Tore (64, 65) aufweist, die von den Signalen $S_1$ und $S_2$ gesteuert werden und das Signal T zugeführt erhalten, daß die beiden Ausgangssignale dieser beiden Tore integriert und in einem Komparator (66) verglichen werden, daß das Ausgangssignal des Komparators einen Umschalter (67) steuert, dem die beiden Signale $S_1$ und $S_2$ zugeführt werden, und daß das Ausgangssignal dieses Umschalters (67), d. h. $S_1$ oder $S_2$, die Nullsetzung eines Teilerschaltkreises (68) bewirkt, der durch 2 teilt, das Signal $U_1$ zugeführt erhält und das erstellte Signal S liefert.

FIG.1

FIG.2

# FIG.3

# FIG.5

FIG.4